Europäisches Patentamt

European Patent Office

Office européen des brevets

(11) Publication number: **0 266 403**
**B1**

(12) **EUROPEAN PATENT SPECIFICATION**

(45) Date of publication of patent specification: **27.12.90**

(21) Application number: **87903271.2**

(22) Date of filing: **28.04.87**

(86) International application number:
**PCT/DK87/00045**

(87) International publication number:
**WO 87/06434 05.11.87 Gazette 87/24**

(51) Int. Cl.⁵: **A 23 N 17/00**

(54) **METHOD FOR CONTROLLING A FODDER MIXING PLANT AND FODDER MIXING PLANT FOR CARRYING OUT THE METHOD.**

(30) Priority: **29.04.86 DK 1967/86**

(43) Date of publication of application:
**11.05.88 Bulletin 88/19**

(45) Publication of the grant of the patent:
**27.12.90 Bulletin 90/52**

(84) Designated Contracting States:
**AT BE CH DE FR GB IT LI LU NL SE**

(56) References cited:
**EP-A-0 040 406**
**WO-A-81/03076**
**DE-A-2 208 946**
**US-A-4 561 781**

**Derwent's abstract no 46021 K/19, SU 938 909**

(73) Proprietor: **LARSEN, Ebbe Busch**
**Slagkrogen 15**
**DK-5220 Odense SO (DK)**

(72) Inventor: **LARSEN, Ebbe Busch**
**Slagkrogen 15**
**DK-5220 Odense SO (DK)**

(74) Representative: **Larsen, Hans Ole et al**
**Larsen & Birkeholm A/S Skagensgade 64**
**DK-2630 Taastrup (DK)**

Courier Press, Leamington Spa, England.

## Description

The invention relates to a method for controlling a fodder mixing plant for the production of fodder pellets, whereby organic and inorganic raw materials are mixed, the mixture is conditioned by the adding of water and/or fat, the mixture is compressed for the formation of fodder pellets, and the pellets are cooled and stored for subsequent delivery.

Fodder mixing plants of this type are being increasingly used due to a demand for a rational and economically advantageous method for manufacturing fodder pellets.

From the specification of Danish patent application no. 2163/83 corresponding to EP—A—40,406, a method is known for controlling a fodder dice pressing plant, which contains a fodder dice press comprising a ring die and a cooler for cooling the produced fodder dice, by which known method at least one parameter for the dice quality is measured between the fodder dice press and the cooler, whereafter this parameter is used for controlling the fodder dice press.

Control is thus effected on the basis of a measuring of the pellets after having been pressed out and prior to their being cooled in order to establish the dust percentage. These measurements form the basis of the adjustment of those factors that influence the pellet and the pellet press, whether this be temperature, conditioning means and motor effect absorption.

This known adjustment plant is, however, not sufficient for achieving optimization of production since there is no possibility of allowing for changes in the composition of the raw materials, additives and the like before the quality of the fodder pellets is established by measuring of the finished pellets, and thereby this will involve a considerable delay and a consequent loss due to adjustments which may be necessary.

It is the object of the invention to provide a method for controlling a plant with several production lines, where the pellets are manufactured on a continuous basis taking into account an overall evaluation and optimization of their quality, including their physical quality, and production price.

This is achieved by a method of the above mentioned type, said method being characteristic in that samples are continuously taken of the raw materials before they are mixed, and the physical quality and nutritive content of the individual raw materials are analyzed, in that samples are continuously taken of the mixture produced by the mixing and the nutritive content of the mixture is analyzed, in that the finished fodder pellets are continuously analyzed in order to record their content of water and/or fat, in that the fodder pellets are continuously analyzed after the adding of water and/or fat for recording their physical quality and nutritive content, in that the physical state of the conditioning and cooling devices situated both before and after the pellet press or pellet presses is continuously analyzed, in that the results of the individual samples and analyses are continuously compared with predetermined values in order to establish any deviations, and in that the quantitative ratio between the raw materials is continuously given a different order of priority in accordance with the established deviations and/or in that the setting of the conditioning and cooling devices is changed for optimization of the nutritive content, physical quality and price of the fodder pellets.

There is, hereby, achieved a unique control and adjustment of a fodder mixing plant in that the adjustment ensures that the pellets are produced according to a recipe in so that their physical quality, including their nutrient and water content, forms a decisive factor in the recipe together with the production costs of the manufacturing process. Hereby the recipe may be optimized in order that fodder pellets may be produced as economically as possible taking their quality into account.

By, as referred to in claim 2, continuously monitoring these factors, the recipe may constantly be optimized during production, which ensures optimum pellet quality in relation to production costs.

The invention also relates to a fodder mixing plant for carrying out the mentioned method, said plant being of the type that comprises a number of raw material silos, sieves and grinders for processing the raw materials, at least one mixing plant for mixing raw materials supplied from the said silos, at least one fodder pellet press designed so that it can press a mixture received from the mixing device or mixing devices for the formation of fodder pellets, conditioning and cooling devices for conditioning and cooling the fodder pellets, at least one finished product silo for receiving and storing the finished fodder pellets, transport elements between the individual parts of the plant for transportation of the raw materials, the mixture and the fodder pellets, as well as weighing means; said plant being characteristic in that the plant has measuring means designed for measuring on a continuous basis the physical quality and nutritive content of such raw materials as are suited for fodder pellet production before they are supplied into a raw material silo, in that the plant has measuring means designed for measuring on a continuous basis the nutritive content of a mixture produced in a mixing device or mixing devices, in that the plant has a first set of pellet sampling means designed to measure the content of water and/or fat of pellets produced in the pellet press or presses, in that the plant has a second set of pellet sampling means designed to measure the content of water and/or fat of fodder pellets cooled in the cooling device, in that the plant has means for measuring the finished products designed to measure the amount of fodder pellets added to a finished products silo and dosage elements for delivering finished products from a finished products silo, whereby the plant has a central computer and subordinate computers designed to adjust the quantitative ratio between the raw materials and the amount of the conditioning means, such as water and/or fat, for optimization of the nutritive value, physical quality and price of the fodder pellets, said adjustment being made on the basis of data derived from the means for measuring the raw materials, the means for measuring the mixture and from the first and second set of pellet sampling means as well as from the means for measuring the finished products.

Hereby is achieved a plant for use when carrying out the method according to the invention, which plant ensures an optimization of the production of fodder pellets and allows for changing conditions, whether these be raw materials or costs.

Finally it is expedient to construct the plant in the manner referred to in claim 4, whereby pellets are produced of the highest possible quality in relation to the production costs.

In the following the invention will be described in further detail with reference to the drawing, in which

fig. 1 shows a block diagram of a single press line in the plant from supply of raw materials to the discharging of the finished product,

fig. 2 shows a block diagram of the same press line showing the computers, and

fig. 3 shows a block diagram of the individual computers and their steps.

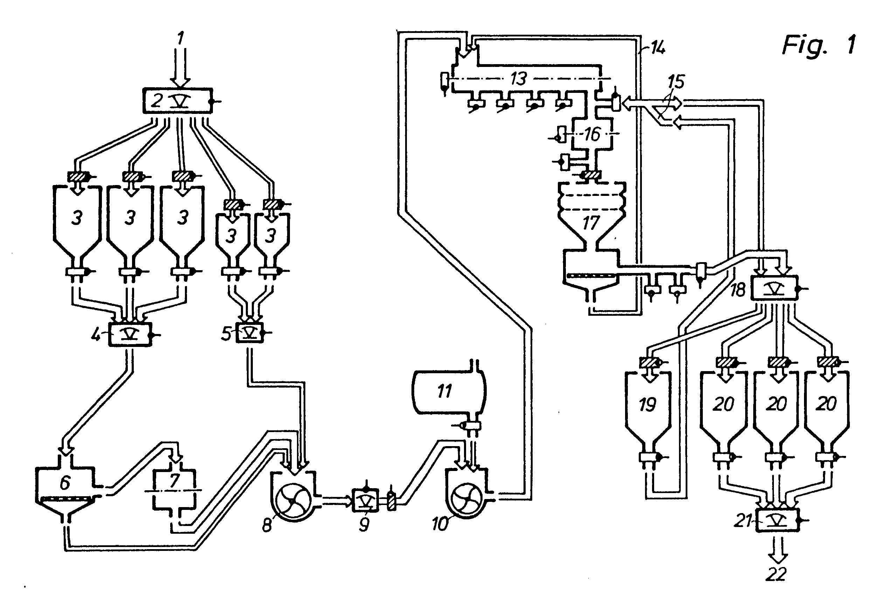

In fig. 1 is shown an example of a fodder mixing plant where, only a single pellet press 16 is shown. It will be understood, however, that the method comprises control means for plants with any required number of pellet presses connected to the surrounding equipment, but the method is sufficiently clearly described on the basis of one single press 16.

The raw materials 1 are weighed at 2 and through gravity feed supplied to the individual raw material silos 3 and may be of any organic or mineral sort.

The raw materials are discharged from the silos 3 and weighed at 4 and 5 before they are delivered to a sieve 6 and mill or grinder 7 and end up in a mixer 8 in to which may be added any required additives from the silos 3.

Via a weighing device 9 the material is carried to a further mixer 10 where liquid may be added, such as water from a tank 11.

From here the mixture of raw materials is carried to a conditioning plant 13, in which binders, water or steam may be added before the mixture is supplied into the actual pellet press 16.

If no pellets are to be produced in the plant, the raw material mixture may via a transport device 15 be carried to a silo 20, from which the raw material mixture may be delivered.

After pressing in the press 16, the pellets are led through a cooler 17 and a sieve to a finishing device where water or fat can be added to the surface of the pellets, before, perhaps via a weighing device 18, they end up in their various finished product silos 20. There may be provided a further silo 19 for pellets that, if required, are to be returned to the pellet press 16.

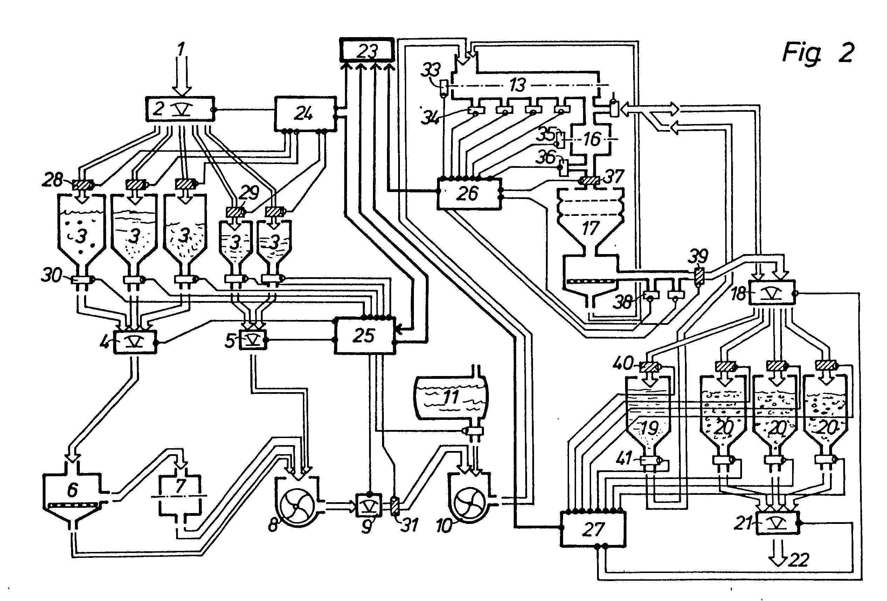

In fig. 2 the same plant is shown with a schematic view of the computers. These comprise a central computer 23, which coordinates and controls the whole plant.

The central computer 23 is connected to subordinate computer units of which unit 24 controls the raw material stock via a connection to the weighing device 2 and to the sampling points 28 and 29 upstream of to the individual silos 3.

Moreover, another subordinate computer 25 controls the batching of the raw materials via dosage elements 30 being connected with the weighing devices 4, 5 and 9 as well as with the sample point 31 for the mixture, before adding water, if so required.

A subordinate computer unit 26 controls the pellet pressing by controlling the additives by means of valves 34 for the conditioning unit 13, by means of a drive motor 33 and a motor 35 and valve 36, as well as by sampling at 37 of the pellets before cooling but after the dosage of fat and water has been sprayed onto the pellets on the die; afterwards any additives may further be added by a coating process.

Finally, there is shown a subordinate computer unit 27 which controls the stock via the sampling 40, the dosage elements 41 and the weighing device 21.

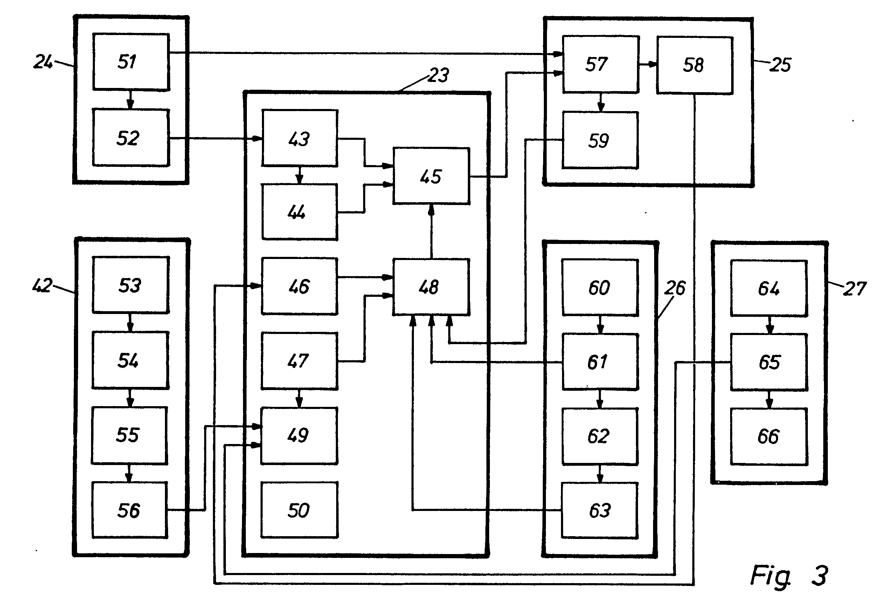

All these subordinate computer units 24, 25, 26, 27 and a further subordinate computer unit 42 shown in fig. 3 for recording the costs, are connected to the central computer 23.

In fig. 3 is shown in a schematic view the primary functions of each subordinate computer unit and the connections between the units.

The central computer 23 has the following steps and functions:

Receives and stores analysis of the biological and physical characteristics 43 of the raw materials,

Priority of the individual raw materials 44,

Recipe print out for the cheapest possible pellets 45,

Analysis of changes in the raw materials 46,

Analysis of energy consumption 47,

Continuous adjustment of recipe 48,

Adjustment of operation costs in relation to pellet quality 49, and

Adjustment of transport through the plant via subordinate computers 50.

The subordinate computer 24 has the following steps and functions:

Adjustment of raw materials to the silo plant 51, and

Sampling and quality control 52.

The subordinate computer 42 has the following steps and functions:

Maintenance programs for the machine elements 53,

Recording of operation hours 54,

Print out of maintenance order 55, and

Summary of operation costs 56.

The subordinate computer 25 has the following steps and functions:

Batching and mixing according to the recipe 57,

Recording of raw material consumption 58, and

Sampling and quality control 59.

The subordinate computer 26 has the following steps and functions:

Technological optimization of the pellet manufacturing 60.

Sampling and quality control 61,

Finishing with water and/or fat 62, and

Sampling and quality control 63.

Finally, the subordinate computer 27 has the following steps and functions:

Adjustment of finished products in the silo plant 64,

Sampling and quality control 65, and

Batching for distribution 66.

The method will now be described in closer detail.

When the recipe is composed from the beginning and thus before test production, this happens on the basis of the amount of the various raw materials placed in the raw material silos 3 and the exact analysis of the nutritive content of these raw materials, in order that when the nutritive content of the recipe in the form of protein, fat, amino acid etc. is known, the central computer 23 can calculate the cheapest possible composition of the recipe, taking into account only the biological values of the raw materials. However, it is in practice difficult to compose a recipe merely on the basis of the biological values as is necessary to take into consideration the influence of the raw materials on the physical characteristics of the pellets.

This means, that in practice there are certain limits to the possibilities of the central computer 23 for optimization as for each raw material it is necessary to state a minimum and maximum in the recipe, depending on their influence on the quality of the pellets.

To prevent the pellet product becoming more expensive, each individual raw material has, apart from its biological values, been given a priority rating 44, depending on its influence on the quality of the finished product.

When the recipe has thus been optimized, with the limits transmitted from the central computer 23 to the subordinate computer 25, the individual raw materials can be batched via the various weighing devices 4, 5 and 9.

The weighed out amount is now carried forward for grinding and mixing, and from mixing to the actual pelletting plant which is controlled by the subordinate computer 26. This automatically controls the pelletting lines and optimizes their production.

Concurrently with the production, the physical quality of the pressed out pellets is continuously monitored at 61.

The result is recorded by the subordinate computer 26 in which are programmed the limits for the quality, as well as an upper and a lower control limit. At the same time, the water content of the pellets is automatically measured at 62.

If the test result is below or above the control limits, the subordinate computer 26 will automatically interfere in various ways. If the quality is, for example, too poor, the subordinate computer may try to adapt the production process technologically, in order that a better quality is achieved. This may be effected by reducing the production speed in order that a higher degree of fusion in the die is produced, or by changing the fat content in order that fat will automatically be removed from the raw material mixture, which amount of fat may instead be applied to the pellets at 38.

The temperature of the raw material mixture, which is conditioned by steam 34, can moreover be changed in a downward direction in order that more friction in the die is achieved. Moreover, a binder 34 can be added immediately prior to the pressing, in order that the pellets become better. Finally, the press rolls in the die may be adjusted in order that a better quality or larger capacity is achieved.

Should none of these changes help, the subordinate computer 26 will be in direct contact with the central computer 23, which will now optimize a new recipe with raw materials which are more capable of being pressed and therefore provide a better quality.

Should the sampling of the pellets show that the quality is better than necessary, the only solution is either to increase production or to apply a cheaper recipe.

In almost all cases it will be economically expedient that the subordinate computer 26 informs the central computer 23 that the quality is better than necessary, and it will therefore optimize a new recipe which is cheaper than the one measured.

The central computer 23 will thus optimize a new recipe which will automatically be transferred to the subordinate computer 25 after an acceptance procedure, if so required.

The subordinate computer 25 now weighs out a new recipe, and since the central computer 23 controls the transport to the presses, this will record when the new recipe composition reaches the presses, whereafter it automatically in the subordinate computer 26 will test the new recipe in comparison to the previous recipe and establish its position within the set limits, and it will if necessary repeat this procedure until optimization has taken place.

It is moreover possible to optimize via the water content of the recipe, which is measured at 39, directly after the cooling process 17. The water content may form an ingredient in the economical optimization of the recipe, just as the water may be taken into consideration when changing the quality on line with the other factors, such as energy consumption and temperature.

Measuring the nutritive content of the cooled pellets at 59 may likewise form part of the recipe optimization, since the subordinate computer 26 transfers these data to the central computer 23 in order to obtain the most exact composition of the recipe. Apart from optimization of the production processes, the central computer 23, via the subordinate computer 27, includes control at 64 of the stock in the finished product silos 19, 20, and control of the delivery at 65 via a weighing out system 21.

In connection with this delivery of the finished product, data concerning the nutritive content may be collected from the subordinate computer 27 via a measuring instrument 41 in order that this may be compared with the guaranteed content, and these data can be transmitted via the subordinate computer 27 to the central computer 23, where they form part of the statistics and the quality control 65.

Also in connection with the weighing in of the raw materials to the raw material silo 3 control is exercised over the stock 64 via the subordinate computer 24, where the supplied raw material amount is recorded, and via the subordinate computer 25, where the consumed raw material amount is recorded.

Apart from optimization of the production processes the central computer 23 contains an information system, in which the energy consumption of the entire plant is controlled at 47, just as the individual part processes are recorded.

Finally, a preventive maintenance program is incorporated in the central computer 23 via the subordinate computer 42, which controls hours of operation for each machine element 64 and prints out maintenance orders 65 according to a predetermined program.

When any repair work is carried out, such work is inputted in the subordinate computer 42 in order to be recorded in the maintenance program and to form part of the economic calculations of production costs 56.

By this method the quality of the product forms a decisive parameter in connection with optimization of the recipe, just as water content and any nutritive content in the manufactured pellets are recorded and together with the production costs are entered as a parameter in the optimization of the recipe.

## Claims

1. Method for controlling a fodder mixing plant for the production of fodder pellets, whereby organic and inorganic raw materials are mixed, the mixture is conditioned by the adding of water or fat, the mixture is compressed for the formation of fodder pellets and the pellets are cooled and stored for subsequent delivery, characterized in that samples (28, 29) are continuously taken of the raw materials before they are mixed, and their physical quality and nutritive content continuously analyzed, in that samples (31) are continuously taken of the mixture produced and its nutritive content analyzed, in that the finished fodder pellets are continuously analyzed (37) in order to record their content of water and fat, in that the fodder pellets are continuously analyzed (39) after the addition of water or fat for recording their physical quality and nutritive content (59), in that the physical state of the conditioning and cooling devices (13 and 17) situated both before and after the pellet press or presses (16) is continuously analyzed, in that the results of the individual samples and analyses are continuously compared with predetermined values to establish any deviations, and in that the quantitative ratio between the different raw materials is continuously given a different order of priority in accordance with the established deviations and the settings of the conditioning and coolings devices (13 and 17) are changed for optimization of the nutritive content; physical quality and price of the fodder pellets.

2. Method according to claim 1, characterized in that the raw material consumption (46, 58), the operational costs of the fodder mixing plant (49) and energy consumption (47) as well as the properties of the raw materials (43) are continuously recorded, and in that the quantitative ratio between the raw materials is continuously given a different order of priority and that the physical setting of the pellet press or presses (16) is changed in accordance with the recorded values.

3. Fodder mixing plant for carrying out the method according to claims 1—2, said plant comprising a number of raw material silos (3), sieves (6) and grinders (7) for processing the raw materials, at least one mixing plant (8, 10) for mixing raw materials supplied from the raw material silos (3), at least one fodder pellet press (16) designed so that it can press a mixture received from the mixing device or devices (8, 10) for the formation of fodder pellets, conditioning (13) or cooling devices (17) for conditioning and cooling of the fodder pellets, at least one finished product silo (20) for receiving and storing the finished fodder pellets, transport elements (15) between the individual parts of the plant for transportation of the raw materials, the mixture and the fodder pellets as well as weighing devices (2, 4, 5, 9, 18, 21), characterized in that the plant has means (28, 29) for measuring on a continuous basis the physical quality and nutritive content of such raw materials as are suited for fodder pellet production before they are supplied into a raw material silo, in that the plant has means (31) for measuring on a continuous basis the nutritive content of a mixture produced in a mixing device or mixing devices, in that the plant has a first set of pellet sampling means (37) designed to measure the content of water and fat of pellets produced in the pellet press or presses (16), in that the plant has a second set of pellet sampling means (39) designed to measure the content of water and fat of fodder pellets cooled in the cooling device (17), and in that the plant has means (40) for measuring the amount of finished product being supplied to a finished product silo (3) and has dosage elements for delivering the finished product from a finished product silo (3); whereby the plant has a central computer (23) and subordinate computers (24, 25, 26) designed to record the quantitative ratio between the raw materials and the amount of the conditioning additives such as water and fat, for optimization of the nutritive value and the physical quality and price of the fodder pellets, such recording being made on the basis of data derived from the means (28, 29) for measuring the raw materials, from the means (31) for measuring the mixture, from the first (37) and second set of pellet sampling means (39) and from the means (40) for measuring the finished product.

4. Fodder mixing plant according to claim 3, characterized in that the plant has subordinate computers (24, 27, 42) connected with the central computer (23) for controlling the stock of raw materials as well as finished fodder pellets and to perform the maintenance of the plant (53, 54, 55) and for calculation and print out of the operational costs (56).

**Patentansprüche**

1. Verfahren zum Steuern einer Futtermischanlage für die Herstellung von Futtertabletten, bei dem organisches und unorganisches Rohmaterial gemischt wird, die Mischung durch Zufuhr von Wasser oder Fett konditioniert wird, die Mischung gepreßt wird für die Bildung von Futtertabletten und die Tabletten gekühlt und gelagert werden für eine nachfolgende Verteilung, dadurch gekennzeichnet, daß Muster (28, 29) kontinuierlich aus den Rohmaterialien entnommen werden, bevor sie gemischt werden und ihre physische Qualität bzw. Eigenschaft, und ihr Nahrungsgehalt analysiert werden, daß Muster (31) kontinuierlich aus der erzeugten Mischung entnommen werden und ihr Nahrungsgehalt analysiert wird, daß die fertiggestellten Futtertabletten kontinuierlich analysiert werden (37), um ihren Gehalt an Wasser und Fett zu speichern, daß die Futtertabletten kontinuierlich analysiert (39) werden, nach dem Zusatz von Wasser oder Fett zum Speichern ihrer physischen Eigenschaft und ihres Nahrungsgehalts (59), daß der physische Zustand der Konditionier- und Kühlvorrichtungen (13 und 17) die vor und nach der Tablettenpresse oder den -pressen (16) angeordnet sind, kontinuierlich analysiert werden, die Ergebnisse der einzelnen Muster und Analysen kontinuierlich mit vorbestimmten Werten verglichen werden, um jegliche Abweichungen festzustellen und daß der Mengenrate zwischen den unterschiedlichen Rohmaterialien kontinuierlich eine unterschiedliche Ordnung von Priorität gegeben wird, gemäß den ermittelten Abweichungen, und die Einstellungen der Konditionier- und Kühlvorrichtungen (13 und 17) geändert werden, zum Optimieren des Nahrungsgehalts der physischen Eigenschaft und des Preises für die Futtertabletten.

2. Verfahren nach Anspruch 1, dadurch gekennzeichnet, daß der Rohmaterialverbrauch (46, 58), die Betriebskosten der Futtermischanlage (49) und der Energieverbrauch (47) sowie die Eigenschaften der Rohmaterialien (43) kontinuierlich gespeichert werden, und daß der Mengenrate zwischen den Rohmaterialien kontinuierlich eine unterschiedliche Ordnung und Priorität gegeben wird, und daß das physische Einstellen der Tablettenpresse oder der -pressen (16) gemäß den gespeicherten Werten geändert wird.

3. Futtermischanlage zur Durchführung des Verfahrens nach Anspruch 1 oder 2, wobei die Anlage eine Anzahl von Rohmaterialsilos (3), Sieben (6) und Mühlen (7), zum Verarbeiten der Rohmaterialien, wenigstens eine Mischanlage (8, 10) zum Mischen von Rohmaterialien, die von den Rohmaterialsilos (3) geliefert werden, wenigstens eine Futtertablettenpresse (16), die ausgebildet ist, so daß sie eine von der Mischvorrichtung oder den Vorrichtungen (8, 10) für die Bildung von Futtertabletten erhaltene Mischung pressen kann, Konditionier- (13) oder Kühlvorrichtungen (17) zum Konditionieren und Kühlen der Futtertabletten, wenigstens ein Fertigproduktsilo (20) zur Aufnahme und Lagerung der fertiggestellten Futtertabletten, Transportelemente (15) zwischen den einzelnen Teilen der Anlage zum Transportieren der Rohmaterialien, die Mischung und die Futtertabletten sowie Wiegevorrichtungen (2, 4, 5, 9, 18, 21) aufweist, dadurch gekennzeichnet, daß die Anlage eine Einrichtung (28, 29) zum Messen der physischen Eigenschaft und des Nahrungsgehalts auf einer kontinuierlichen Basis von solchen Rohmaterialien aufweist, die für die Herstellung von Futtertabletten geeignet sind, bevor sie in ein Rohmaterialsilo gefördert werden, daß die Anlage eine Einrichtung (31) zum Messen des Nahrungsgehalts auf einer kontinuierlichen Basis der Mischung aufweist, die in einer Mischvorrichtung oder Mischvorrichtungen erzeugt wird, daß die Anlage einen ersten Satz von Tablettenuntersuchungseinrichtungen (37) aufweist, die dazu ausgebildet sind, um den Gehalt an Wasser oder Fett der Tabletten zu messen, die in der Tablettenpresse oder den Pressen (16) erzeugt werden, daß die Anlage einen zweiten Satz von Tablettenmusterungseinrichtungen (39) aufweist, die ausgebildet sind, um den Gehalt an Wasser und Fett der in der Kühlvorrichtung (17) gekühlten Futtertabletten zum Messen, und daß die Anlage eine Einrichtung (40) zum Messen der Menge von fertiggestelltem Produkt, das zu einem Fertigproduktsilo (3) befördert wird, und Dosierungselemente zum Liefern von dem fertiggestellten Produkt von einem Fertigproduktsilo (3) aufweist, wobei die Anlage einen Zentralrechner (23) und untergeordnete Rechner (24, 25, 26) aufweist, die so ausgebildet sind, daß sie die Mengenrate zwischen den Rohmaterialien und der Menge der Konditionierzuschlagstoffe, wie Wasser und Fett speichern, zum Optimieren des Nahrungswerts und der physischen Eigenschaft und des Preises der Futtertabletten, wobei eine derartige Speicherung auf der Basis von Daten erfolgt, die von der Einrichtung (28, 29) zum Messen der Rohmaterialien, von der Einrichtung (31) zum Messen der Mischung, und von dem ersten (37) und zweiten Satz von Tablettenmusterungseinrichtungen (39) und von der Einrichtung (40) zur Messung des fertiggestellten Produkts abgeleitet werden.

4. Futtermischanlage nach Anspruch 3, dadurch gekennzeichnet, daß die Anlage untergeordnete Rechner (24, 27, 42) aufweist, die mit dem Zentralrechner (23) zur Steuerung des Speichers von Rohmaterialien sowie der fertiggestellten Futterabletten aufweist, und um den Betrieb der Anlage (53, 54, 55) auszuführen, und für die Berechnung und den Ausdruck von Betriebskosten (56).

**Revendications**

1. Procédé de commande d'une installation de mélange de fourrages pour la production de granulés de fourrage, grâce auquel des matières premières organiques et minérales sont mélangées, le mélange est conditionné par addition d'eau ou de matière grasse, le mélange est comprimé pour former des granulés de fourrage et les granulés sont refroidis et stockés en vue d'une distribution ultérieure, caractérisé par le fait que des échantillons (28, 29) sont prélevés par les matières premières avant que celles-ci soient mélangées, et la qualité physique de même que la teneur nutritive sont analysées, par le fait que des échantillons (31) sont prélevés dans le mélange produit et que leur teneur nutritive est analysée, par le fait que les granulés finis de fourrage sont analysés (37) afin d'enregistrer leur teneur en eau et en matière grasse, par le fait que des granulés de fourrage sont analysés (39) après l'addition d'eau et/ou de matière grasse pour enregistrer leur qualité physique et leur teneur nutritive (59), par le fait que l'état physique des dispositifs de conditionnement et de refroidissement (13 et 17) situés à la fois avant et après la presse ou les presses à granulés (16) est analysé, par le fait que les résultats des échantillons individuels et des analyses sont comparés avec des valeurs prédéterminées afin de définir d'éventuels écarts, et par le fait que le rapport quantitatif entre les matières premières est gratifié d'un ordre de priorité différent selon les écarts établis, et que les réglages des appareils de conditionnement et de refroidissement (13 et 17) sont modifiés pour optimiser la teneur nutritive, les qualités physiques et le prix des granulés de fourrage.

2. Procédé selon la revendication 1, caractérisé par le fait que la consommation en matières premières (46, 58), les coûts d'exploitation de l'installation de mélange de fourrages (49) et la consommation d'énergie (47) ainsi que les propriétés des matières premières (43) sont enregistrés, en continu, et par le fait que le rapport quantitatif entre les matières premières est affecté d'un ordre de priorité différent et que le réglage matériel de la ou des presses à granulés (16) est modifié en fonction des valeurs enregistrées.

3. Installation de mélange de fourrages pour mettre en oeuvre le procédé selon les revendications 1—2, ladite installation comprenant un certain nombre de silos à matières premières (3), des cribles (6) et des broyeurs (7) pour traiter les matières premières, au moins une installation de mélange (8, 10) pour mélanger les matières premières provenant des silos à matières premières (3), au moins une presse pour granulés de fourrage (16) conçue de manière à pouvoir comprimer un mélange reçu du ou des dispositifs mélangeurs (8, 10) pour former des granulés de fourrage, des appareils de conditionnement (13) ou de refroidissement (17) pour conditionner et refroidir les granulés de fourrage, au moins un silo pour produit fini (20) destiné à recevoir et à stocker les granulés de fourrage finis, des éléments de transport (15) entre les parties individuelles de l'installation pour transporter les matières premières, le mélange et les granulés de fourrage et également des dispositifs de pesage (2, 4, 5, 9, 18, 21), caractérisé par le fait que l'installation comprend des moyens (28, 29) pour mesurer de manière continue la qualité physique et la teneur nutritionnelle de ces matières premières et s'assurer qu'elles conviennent à la production de granulés de fourrage avant qu'elles soient introduites dans un silo à matières premières, par le fait que l'installation comprend les moyens (31) pour mesurer en continu la teneur nutritionnelle d'un mélange obtenu dans un ou plusieurs dispositifs de mélangeage, par le fait que l'installation comprend un premier ensemble de moyens d'échantillonnage des granulés (37) conçu pour mesurer la teneur en eau et en matières grasses des granulés formés par la presse ou les presses à granulés (16), par le fait que l'installation comprend un second ensemble de moyens d'échantillonnage des granulés (39) conçu pour mesurer la teneur en eau et en matière grasse des granulés de fourrage refroidis dans le dispositif de refroidissement (17), et par le fait que l'installation comprend des moyens (40) de mesure de la quantité de produits finis à introduire dans un silo (3) pour produit fini; par le fait que l'installation comprend un ordinateur central (23) et des ordinateurs annexes (24, 25, 26) organisés pour enregistrer le rapport quantitatif entre les matières premières et l'importance du conditionnement par des additifs tels que de l'eau et des matières grasses, afin d'optimiser la valeur nutritionnelle et la qualité physique ainsi que le prix des granulés de fourrage, un tel enregistrement étant effectué d'après des données déduites des moyens (28, 29) de mesures des matières premières, des moyens (31) de mesure du mélange, du premier (37) et du second ensembles de moyens d'échantillonnage des granulés (39) et des moyens (40) de mesure du produit fini.

4. Installation de mélanges selon la revendication 3, caractérisé par le fait que l'installation comprend des ordinateurs annexes (24, 27, 42) reliés à l'ordinateur central (23) pour gérer le stock des matières premières ainsi que les granulés de fourrage finis et pour assurer la maintenance de l'installation (53, 54, 55) ainsi que le calcul et l'impression des coûts de fonctionnement (56).

Fig. 1

EP 0 266 403 B1

Fig. 2

EP 0 266 403 B1

Fig 3